(19) Europäisches Patentamt

European Patent Office

Office européen des brevets

(11) Publication number: 0 197 451
A2

(12) EUROPEAN PATENT APPLICATION

(21) Application number: 86104235.6

(22) Date of filing: 27.03.86

(51) Int. Cl.4: G01K 17/06

(30) Priority: 01.04.85 US 718147

(43) Date of publication of application:
15.10.86 Bulletin 86/42

(84) Designated Contracting States:
CH DE FR GB LI SE

(71) Applicant: HONEYWELL INC.
Honeywell Plaza
Minneapolis Minnesota 55408(US)

(72) Inventor: Holland, Thomas H.
4708 Ewing Avenue South
Minneapolis Minnesota 55410(US)
Inventor: Pejsa, Jane H.
2120 Kenwood Parkway
Minneapolis Minnesota 55405(US)

(74) Representative: Rentzsch, Heinz et al
Honeywell Europe S.A. Holding KG Patent-
und Lizenzabteilung Kaiserleistrasse 55
D-6050 Offenbach am Main(DE)

Fig. 2

Abstract:


Artificial energy consumption is submetered in a multi-
user environment in which a central source services a
plurality of individual users by supplying heating or
cooling fluid to individual space conditioning subsystems
comprising separate fluid heat exchangers (21), having
a substantially constant rate of flow when in the ON
state by monitoring of the ON/OFF status of each
individual space conditioning subsystem, monitoring the
temperature differential across each separate heat
exchanger, and utilizing the monitored ON time and the
temperature differentials in conjunction with the
relative heat capacity of the measured fluid to determine
the energy consumption of each such subsystem relative
to all the subsystems served by the central source

HONEYWELL INC.  
Honeywell Plaza  
Minneapolis, Minn. USA

March 25, 1986  
T1009635 EP  
HR/de

ENERGY SUBMETERING SYSTEM

The invention relates to a submetering system for multi-tenant buildings having individual space conditioning subsystems.

It has been customary to heat and cool multi-tenant buildings such as apartments and office buildings by employing large central systems to serve a plurality of separately leased areas. In this manner the central system supplies heating or cooling energy in the form of steam or hot or chilled water to individual heat exchangers or space conditioning subsystems located in each rental unit. This approach is quite efficient from the standpoint of heating or cooling the entire building. If the cost is borne by the renters as part of general building overhead apportioned without reference to actual energy use as by using rented square footage as a basis, such approach is inherently unfair and provides

- 2 -

very little incentive for energy conservation by individual tenants. One concept which provides incentives which lead to both lower overall usage and lower individual consumption is that of using direct individual consumption monitors or submetering systems. Several such systems exist for use with central steam or hot water heating systems, for example. They use conventional liquid flow meters together with temperature sensors to measure actual energy supplied to individual rental units. However, such devices are quite expensive and require piping and other changes which entail substantial installation costs, particularly in the retrofit environment. It is the object of the present invention to disclose a low-cost, relatively accurate system for submetering energy consumption. This object is achieved by the method as characterized in claim 1. Preferred improvements can be taken from the subclaims. An especially useful system for carrying on the invention is described in claim 5.

The present invention provides a low-cost submeterin system for hot or chilled water space-conditioning systems which monitors a plurality of individual energy delivery space-conditioning systems and which readily lends itself to retrofitting existing structures. The present invention measures energy consumption by monitoring the state of each individual energy delivery subsystem, i.e., the "ON/OFF" status and the temperature difference across the water-to-air heat exchanger of the subsystem. The temperature difference may be measured based on the air-side or water-side as desired. The flow through the heat exchanger (pipe, fan coil unit, radiator, etc.) is a constant determined from the system drawings and initial calibration.

The system includes a central receiving and monitoring station which includes a master transceiving unit have calculating, data storage and display capabilities. Remote transceiver units are located at each submetered space-conditioning subsystem. These units transmit signals, normally converted to digital form by an analog to digital (A/D) converter, related to ON/OFF state and temperature data in response to interrogation by the master unit at desired time intervals ($\Delta t$). Communication between units may be by any convenient mode such as 2-way power line carrier, telephone line, radio signal or direct connection.

In operation, at each preselected $\Delta t$, normally every few seconds, every remote unit is interrogated by the master unit over a communication channel as by 2-way powerline carrier. If the energy delivery system is ON, the remote unit responds with digital signals representing the ON state and the temperature drop or rise across the heat exchanger. The master unit accumulates and integrates these data individually for each submetered unit and thereby monitors the total energy consumption of that unit according to the equation:

$$Q = C \sum_{n}^{time} \cdot \Delta T_n \cdot \Delta t, \qquad (1)$$

where C is the constant representing the flow rate of the measured medium at the remote unit and the necessary energy conversion factor, $\Delta T_n$ is the temperature drop or rise at each remote location ($\Delta T_n = 0$ when delivery system - fan or valve - is OFF), and $\Delta t$ is the frequency of interrogation. Q may be in calories or BTU's as desired. In addition, by factoring into the constant C, the appropriate conversion factor, energy share can be computed as a proportion or as a customer cost in dollars rather than as Q or energy usage. A permanent record may also be kept if desired.

This method of submetering energy consumed in mastermetered buildings, while still an approximation, comes close to the accuracy of conventional BTU meters or calorimeters and by eliminating the need for direct measurement of flow, this method is significantly less costly.

The invention will briefly be explained with reference to the attached drawings, in which

FIGURE 1 is a block diagram of one embodiment of the invention;

FIGURE 2 depicts the connection of a remote unit in accordance with one embodiment of the invention.

## DESCRIPTION OF THE PREFERRED EMBODIMENT

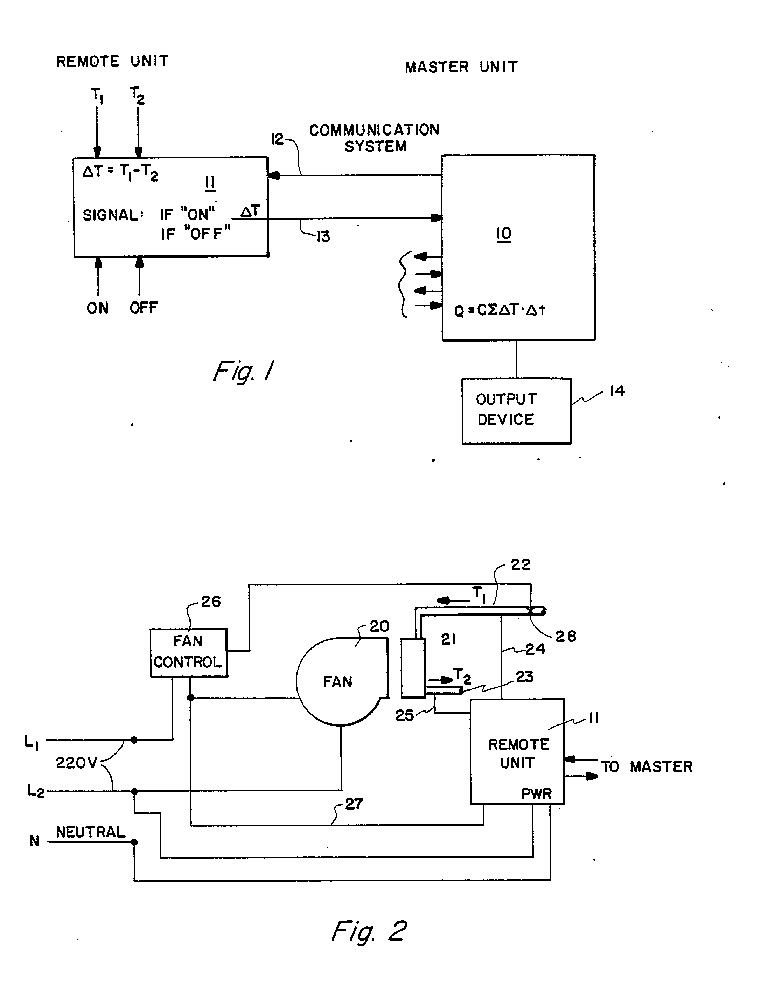

Figure 1 depicts a block diagram of a typical submetering system utilizing the invention. This includes a master unit 10 in 2-way communication with a plurality of remote units 11 as illustrated by lines 12 and 13. The master unit 10 is also connected to an output device illustrated at 14. The master unit is one which is capable of continuously calculating consumption or energy usage and integrating such usage over a period of time for each remote unit served.

The master unit is normally programmed to interrogate each remote unit on a continuous basis at preselected intervals.  Such a device is normally microprocessor controlled and units which will perform the task are readily available on the market and can be programmed as desired by someone with ordinary skill in the art.

Each remote unit is designed to measure the incoming temperature T1 of the heating or cooling medium and the temperature T2 of that medium downstream of a fan coil or other heat exchanging device. This, of course, yields information related to $T_1 - T_2$ or $\Delta T$.  In the alternative, the temperature of the air flowing across the room side of the heat exchanger can be measured and this $\Delta T$ utilized, if desired.  This data along with ON or OFF status data is transmitted by the remote unit upon interogation by the master unit 10.

Figure 2 depicts a schematic diagram of the connection of a remote sensing unit to an individual space conditioning subsystem for submetering.  The illustrated system is one adapted for hot water heating or chilled water cooling.  The typical set-up includes a fan 20 operating in conjunction with a heat exchanger 21 having an inlet 22 and outlet 23.  Inlet and outlet temperatures are sensed and communicated to the remote unit 11 as by lines 24 and 25, respectively. A control valve is shown at 28. The fan control 26 is provided and the ON or OFF status of that unit is transmitted to the remote unit 11 as by conductor 27. In this manner the remote unit is able to sense temperature and the ON/OFF status of the fan unit as interrogated by the master unit. For most applications, the remote unit 11 contain analog to digital conversion systems to convert the data assimilated to digital form for transmission to the master unit.

In the normal set-up any particular application will involve a plurality of the remote units 11 coordinated by in communication with a master unit 10. This gives the system the ability to continually monitor energy usage by a relatively large number of units in a large building or complex.

In operation, the master unit will interrogate each of the remote units on a predetermined time basis such as at an interval of every few seconds depending on the number of units required to be addressed. It will then receive status and temperature data from each of the units and if the particular status of a unit is determined to be ON, the $\Delta T$ data will be utilized to increment the energy usage according to equation 1. Any type of output means desired could be used to display energy usage, print billings, store data for future reference or other use.

As can be seen from the drawings, the submetering system of the present invention can readily be installed in existing structure simply by connecting the remote unit to existing heating/cooling subsystem wiring and installing a pair of temperature sensors either on the inlet and outlet sides of the energy supply-medium side of the heat exchanger or measuring the temperature of the air from the fan on each side of the heat exchanger. This allows for low cost, accurate submetering in existing buildings.

- 9 -

Claims:

1. A method for submetering artifical energy consumption in a multi-user environment in which a central source services a plurality of individual users by supplying heating or cooling fluid to individual space conditioning subsystems comprising separate fluid heat exchangers (21) each having a substantially constant rate of heat exchange when in the ON state, c h a r a c t e r i z e d b y    the steps of

   a) monitoring of the ON/OFF status of each individual space conditioning subsystem;

   b) monitoring the temperature differential across each said heat exchangers (21);

   c) utilizing the monitored ON time and the temperature differentials in conjunction with the relative heat capacity of the measured fluid to determine the heat consumption of each such subsystem relative to all such subsystems.

2. The method of claim 1 c h a r a c t e r i z e d   i n t h a t   the total temperature differential measured is that of the fluid supplied by the central source between the inlet and outlet of said heat exchanger (21).

3. The method of claim 1 c h a r a c t e r i z e d i n t h a t the temperature differential measured is that of the external fluid before and after flowing across the heat exchanger (21).

4. The method of one of the preceding claims c h a r - a c t e r i z e d i n t h a t the energy Q consumed by any one of said individual space conditioning subsystems is determined according to the relationship

$$Q = C \sum_{n}^{time} \Delta T_n \cdot \Delta t$$

where C is a constant containing mass flow and specific heat factors,

T is the temperature differential of the measured fluid, and

t is each ON interval of the heating cycle.

5. A system for submetering artificial energy consumption in a multi-user environment in which a central source services a plurality of individual users by supplying heating or cooling fluid to individual space conditioning subsystems comprising separate fluid heat exchangers (21) each having a substantially constant rate of heat exchange when in the ON state c h a r - a c t e r i z e d   b y

a) a master control unit (10) for interrogating a plurality of remote units (11), receiving information therefrom and storing and processing said information and producing an output (14) relative to said energy usage;

b) a plurality of remote monitoring units (11), one associated with each said individual space conditioning subsystem further comprising;

b1) means for monitoring the time interval of the ON/OFF status of each individual space conditioning subsystem;

b2) means for monitoring the temperature differential across each said separate heat exchanger means;

c) 2-way communication means (12,13) for enabling communication between said master control units (10) and said remote units (11); and

d) output means (14) in communication with said master control units (10) for reproducing an output relative to said energy usage.

REMOTE UNIT

MASTER UNIT

$T_1$  $T_2$

12  COMMUNICATION SYSTEM

$\Delta T = T_1 - T_2$

$\underline{11}$

SIGNAL:   IF "ON"     $\Delta T$
          IF "OFF"

13

$\underline{10}$

$Q = C\Sigma\Delta T \cdot \Delta t$

ON   OFF

*Fig. 1*

OUTPUT DEVICE   14

22

26   $T_1$

FAN CONTROL   20   28

21   24

FAN   $T_2$   23

25   11

$L_1$   REMOTE UNIT

220V   TO MASTER

$L_2$   PWR

27

N   NEUTRAL

*Fig. 2*